# EUROPEAN PATENT APPLICATION

(11) **EP 2 565 841 A1**
(43) Date of publication of application: **06.03.2013**
(21) Application number: 10850784.9
(22) Date of filing: 30.04.2010
(51) Int. Cl.: G06Q 50/00, G06K 7/10, G06F 21/20

(54) **CONTENTS SERVICE METHOD, AND MEMBER INFORMATION PROVIDING SERVICE SYSTEM AND METHOD USING COMMUNICATION NETWORK**

(71) Applicant: Kang, Su-Hyun, Kwangju 506-020 (KR)
(72) Inventor: Kang, Su-Hyun, Kwangju 506-020 (KR)
(74) Representative: Obst, Bernhard
(86) International application number: PCT/KR2010/002752
(87) International publication number: WO 2011/136416

(57) **Abstract**

The present invention relates to a technique capable of transmitting and receiving contents or finding lost objects using a code.

According to the present invention, contents can be transmitted and received, and member information needed to find a lost object can be confirmed using a code as a medium. In addition, possibility of malicious use or misuse of information that is accessed through a code by a third party against the intention of a member can be prevented.

## Description

### TECHNICAL FIELD

The present invention relates to a technique capable of transmitting and receiving contents or finding lost objects using a code.

### BACKGROUND ART

Codes are widely distributed in daily lives and used to provide various conveniences in accessing information.

Examples of such codes include one-dimensional bar codes arranging line-shaped bars one after another and two-dimensional codes arranging points in a square.

Generally, a separate code reader is needed to acquire information contained in a code. Accordingly, only those who possess the separate code reader may figure out the information contained in the code, and thus the general public without a code reader is difficult to use the information contained in the code.

However, techniques capable of easily acquiring information contained in a code through a portable terminal provided with a camera have been developed recently. Furthermore, the techniques have been developed so as to acquire a variety of information related to the code, in addition to the information contained in the code, after connecting to the Internet through the code. For example, an owner of the portable terminal may connect to a price comparison website using a bar code printed on merchandise displayed at a shopping center and easily obtain information such as a store selling the merchandise at a lowest price.

The code described above has been developed as a medium for providing further more pieces of related information through the Internet from a medium which provides only the information contained in the code. It is since that the code allows a user to easily access desired information in a speedy way.

The present invention has been developed to easily and quickly acquire information through a code and, furthermore, to use the code to transmit and receive contents among acquaintances or to find lost objects.

### DISCLOSURE OF INVENTION

### TECHNICAL PROBLEM

Therefore, the present invention has been made in view of the above problems, and it is an object of the present invention to provide a technique capable of transmitting and receiving contents and finding lost objects using a code, which can prevent possibility of malicious use or misuse of information by a third party.

### TECHNICAL SOLUTION

To accomplish the above object, according to one aspect of the present invention, there is provided a contents service method using a communication network, the method comprising: a registration step of registering connection information for connecting to a site which provides contents service and identification information on a member, which are contained in a code printed on merchandise; a lock setting step of setting an information protection lock for preventing unauthorized access of a third party to contents linked to the identification information; a lock release step of releasing the information protection lock set in the lock setting step; a linking step of receiving a request for certain contents and linking the contents to the identification information, if a third party connected to the site using a communication terminal selects the contents that can be provided by the site and requests to provide the contents to the specific member registered in the registration step; a determination step of determining whether or not the information protection lock is set, if the specific member recognizes the code and connects to the site through the member terminal having a code recognition module for recognizing the code; and a transmission step of prohibiting transmission of the contents linked to the specific member to the member terminal if the information protection lock is set, and transmitting the contents linked to the identification information to the member terminal if the information protection lock is released.

According to another aspect of the present invention, there is provided a contents service method using a communication network, the method comprising: a registration step of registering connection information for connecting to a site which provides contents service and identification information on a member, which are contained in a code printed on merchandise; a lock setting step of setting an authentication lock for preventing unauthorized access of a third party to contents linked to the identification information; a lock release step of releasing the authentication lock set in the lock setting step; a linking step of receiving a request for certain contents and linking the contents to the identification information, if a third party connected to the site using a communication terminal selects the contents that can be provided by the site and requests to provide the contents to the specific member registered in the registration step; a determination step of determining whether or not the authentication lock is set, if the specific member recognizes the code and connects to the site through the member terminal having a code recognition module for recognizing the code; and a transmission step of transmitting the contents linked to the identification information to the member terminal after performing an authentication process if the authentication lock is set, and transmitting the contents linked to the identification information to the member terminal without performing the authentication process if the authentication lock is released.

The contents service method preferably further comprises a notification step of notifying the member terminal of arrival of new contents for the specific member.

According to still another aspect of the present invention, there is provided a service system for providing member information using a communication network, the system comprising: merchandise printed with a code containing connection information for accessing information on a member (hereinafter, referred to as member information); a communication terminal for recognizing the code printed on the merchandise, accessing the member information using the connection information and confirming the member information; and a server having the member information, the server for transmitting the member information to the communication terminal which desires to access the member information and prohibiting access to the member information through the communication terminal if the information protection lock is set.

According to still another aspect of the present invention, there is provided a service system for providing member information using a communication network, the system comprising: merchandise printed with a code containing connection information for accessing information on a member (hereinafter, referred to as member information); a communication terminal for recognizing the code printed on the merchandise, accessing the member information using the connection information and confirming the member information; and a server having the member information, the server for permitting the communication terminal to access the member information after performing an authentication process on the communication terminal which desires to access the member information, wherein the authentication process is omitted if the authentication lock is released.

According to still another aspect of the present invention, there is provided a service system for providing member information using a communication network, the system comprising: merchandise printed with a code containing connection information for accessing information on a member (hereinafter, referred to as member information); a communication terminal for acquiring an image of the code printed on the merchandise and accessing the member information through the connection information; and a server for analyzing the connection information obtained from the image of the code and transmitting the connection information to the communication terminal when the image of the code is received from the communication terminal, wherein transmission of the connection information to the communication terminal is prohibited if the information protection lock is set on the member information related to the connection information, and the communication terminal which desires to access the member information through the connection information is permitted to access the member information.

According to still another aspect of the present invention, there is provided a service method for providing member information using a communication network, the method comprising: a registration step of registering connection information and the member information, the connection information for connecting to a site which provides information on a member (hereinafter, referred to as 'member information'); a lock setting step of setting an information protection lock for blocking access to the member information; a lock release step of releasing the information protection lock set in the lock setting step; a determination step of determining whether the information protection lock is set or released when a request for accessing the member information is received from a certain communication terminal; and a connection step of prohibiting the communication terminal from accessing the member information if the information protection lock is set, and permitting the communication terminal to access the member information if the information protection lock is released.

According to still another aspect of the present invention, there is provided a service method for providing member information using a communication network, the method comprising: a registration step of registering connection information and the member information, the connection information for connecting to a site which provides information on a member (hereinafter, referred to as 'member information'); a lock setting step of setting an authentication lock for authentication needed to access the member information; a lock release step of releasing the authentication lock set in the lock setting step; a determination step of determining whether the authentication lock is set or released when a request for accessing the member information is received from a certain communication terminal; and a connection step of permitting the communication terminal to access the member information after performing an authentication process if the authentication lock is set, and permitting the communication terminal to access the member information without performing the authentication process if the authentication lock is released.

According to still another aspect of the present invention, there is provided a service method for providing member information using a communication network, the method comprising: a registration step of registering connection information and the member information, the connection information for connecting to a site which provides information on a member (hereinafter, referred to as 'member information'); receiving an image of a code from a certain communication terminal; an analysis step of analyzing the connection information for accessing the member information from the image of the code received from the communication terminal which desires to access the member information; a transmission step of transmitting the connection information analyzed in the analysis step to the communication terminal; and a connection step of permitting the communication terminal which desires to access the member information through the connection information to access the member information.

The service method preferably further comprises the steps of: a lock setting step of setting an information protection lock for blocking access to the member information; and a lock release step of releasing the information protection lock set in the lock setting step, and excluding the transmission step if the information protection lock is set.

The service method preferably further comprises a notification step of notifying the member of position information of the communication terminal which requests access to the member information if contact information of the member is included in the member information.

The service method preferably further comprises a notification step of notifying the member of a phone number of the communication terminal which requests access to the member information if contact information of the member is included in the member information.

### ADVANTAGEOUS EFFECTS

According to the present invention described above, contents can be transmitted and received, and member information needed to find lost objects can be confirmed, using a code with which it is easy to access information in a speedy way. In addition, possibility of malicious use or misuse of information that is accessed through a code by a third party against the intention of a member can be prevented.

### BRIEF DESCRIPTION OF THE DRAWINGS

FIG. 1 is a view showing the configuration of a system implementing a contents service method using a communication network according to the present invention.

FIG. 2 is a flowchart illustrating a contents service method using a communication network according to a first embodiment of the present invention, which can be implemented in the system shown in FIG. 1.

FIG. 3 is a flowchart illustrating a contents service method using a communication network according to a second embodiment of the present invention, which can be implemented in the system shown in FIG. 1.

FIG. 4 is a view showing the configuration of a service system for providing member information using a communication network according to a first embodiment of the present invention.

FIG. 5 is a flowchart illustrating a service method for providing member information using a communication network according to a first embodiment of the present invention, which can be implemented in the system shown in FIG. 4.

FIG. 6 is a view showing the configuration of a service system for providing member information using a communication network according to a second embodiment of the present invention.

FIG. 7 is a flowchart illustrating a service method for providing member information using a communication network according to a second embodiment of the present invention, which can be implemented in the system shown in FIG. 6.

FIG. 8 is a view showing the configuration of a service system for providing member information using a communication network according to a first embodiment of the present invention.

FIG. 9 is a flowchart illustrating a service method for providing member information using a communication network according to a first embodiment of the present invention, which can be implemented in the system shown in FIG. 8.

### DESCRIPTION OF SYMBOLS

410, 610, 810: Merchandise

420, 620, 820: Communication terminal

430, 630, 830: Server

C: Code

### BEST MODE FOR CARRYING OUT THE INVENTION

The preferred embodiments of the present invention will be hereafter described in detail, with reference to the accompanying drawings. Furthermore, in the drawings illustrating the embodiments of the present invention, elements having like functions will be denoted by like reference numerals and details thereon will not be repeated.

<Example of contents transmission and reception system>

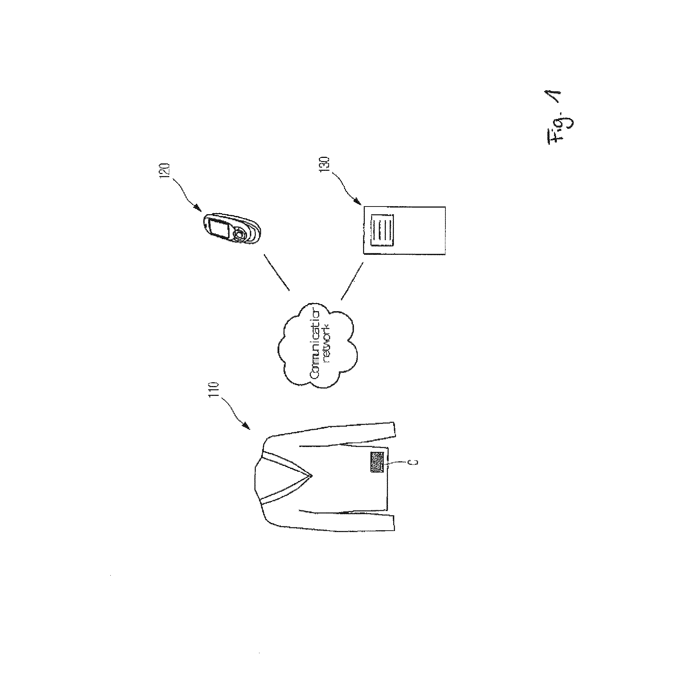

FIG. 1 is a view showing a system in which a contents service method using a communication network according to an embodiment of the present invention can be implemented.

As shown in FIG. 1, a system needed for transmitting and receiving contents includes merchandise 110, a member terminal 120 and a server 130.

A code C is printed on the merchandise 110, and connection information (e.g., URL) for connecting to a site provided by the server 130 through the Internet is contained in the code C.

The member terminal 120 is capable of wired or wireless communication and has a camera. Here, the camera functions as a code recognition module which can recognize the code C. If a member handles the camera and photographs the code C printed on the merchandise, the member terminal 120 decodes the code C using an automated decode program, acquires the connection information and connects to the site provided by the server 130.

The sever 130 may provide a variety of contents and controls to transmit or receive appropriate contents by permitting or prohibiting connection of the member terminal 130 which tries connection to the site using the code C.

<First embodiment related to contents transmission and reception>

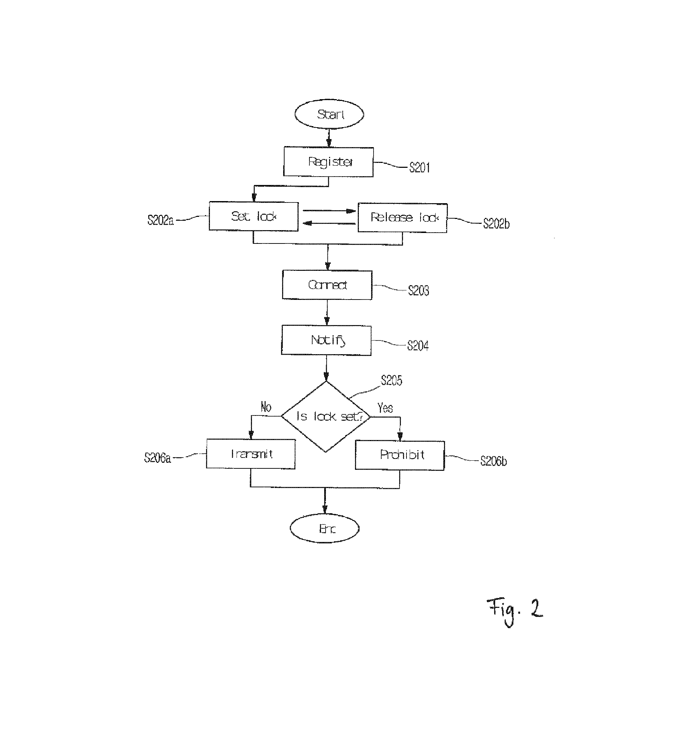

A first embodiment related to contents transmission and reception accomplished in the system of FIG. 1 is described with reference to the flowchart of FIG. 2.

1. Registration <S201>

Connection information for connecting to a site and identification information (e.g., information for identifying a member, such as a phone number of a member terminal, a product serial number of merchandise possessed by the member and printed with a code, a resident registration number of an individual, a unique identification or number randomly assigned by a relevant site or the like) for identifying a member are registered in the server 130. Here, the member may connect to the server through the member terminal or a separate communication terminal and register the connection information and the identification information, or a store or a manufacturer selling the merchandise (accessories, clothes, shoes, bags and the like) may register the connection information and the identification information on behalf of the member. In addition, the connection and identification information can be separately registered (or acquired) in such a manner that the connection information is registered by a store or a manufacturer selling the merchandise and the identification information is registered by the member. For example, if the connection information is a URL, the identification information is personal information unique to the member. Accordingly, if the registration step is performed when a phone number of a member (e.g., 010-9866-2222) is used as the identification information, a personalized page (or site) can be created.

2. Lock setting <S202a>

The member may connect to a relevant site through the member terminal 120 (or a separate communication terminal depending on implementation) and set an information protection lock to prevent unauthorized access of a third party to the contents (images, moving images, music and the like) linked to the identification information. This is to prevent leakage of the contents without permission by the member terminal 120 that is out of control of the member.

3. Lock release <S202b>

A member may connect to a relevant site and release the set information protection lock. When the information protection lock is released, the member terminal 120 trying to decode the code C and connect to the site may freely connect to the site and access web pages assigned to the member in the site and the contents linked to the identification information of the member, without any particular connection restriction.

Either of steps S202a and S202b is selectively performed by the member (this is the same in the other embodiments).

4. Connection <S203>

If a third party (e.g., an acquaintance of the member) connecting to the site through a communication terminal (not shown) requests to provide the member with the contents provided by the site or contents contained in the communication terminal of the third part, the server 130 accepts the request of the third party and connects relevant contents to the identification information of the member.

5. Notification <S204>

In addition, the server 130 notifies the member terminal 120 of a message (SMS, MMS or an automated voice information message) informing that new contents have been arrived for the member, in addition to linking the contents to the identification information of a corresponding member. This notification step is further preferable in implementing the service of the present invention.

6. Determination <S205>

If the member receiving the notification photographs the code C printed on the merchandise 110 of the member using the member terminal 120 and tries connection to the site and access to the contents arrived for the member, the server 130 determines whether or not the information protection lock is set.

7. Transmission <S206a and S206b>

If the information protection lock is released, the server 130 transmits the contents to the member terminal 120 <206a>. If the information protection lock is set, the server 130 prohibits transmission of the contents to the member terminal 120 <S206b>.

Here, a method of fundamentally prohibiting the member terminal 120 from accessing the contents and a method of prohibiting transmission of the contents while allowing the member terminal only to confirm arrival of the contents may be a method of prohibiting transmission of the contents. The method of prohibiting the member terminal 120 from accessing the contents can be implemented by blocking connection to the site (or blocking access to the contents) when a user tries the connection through the member terminal 120. In addition, the method of prohibiting transmission of the contents while allowing the member terminal only to confirm arrival of the contents can be implemented by rejecting the request for transmitting corresponding contents although a user connecting through the member terminal 120 may confirm arrival of the new contents by himself or herself.

It is apparent that transmission of the contents can be accomplished by the connection established through the member terminal 120 without a separate procedure or may be accomplished by a request from a connected member.

<Second embodiment related to contents transmission and reception>

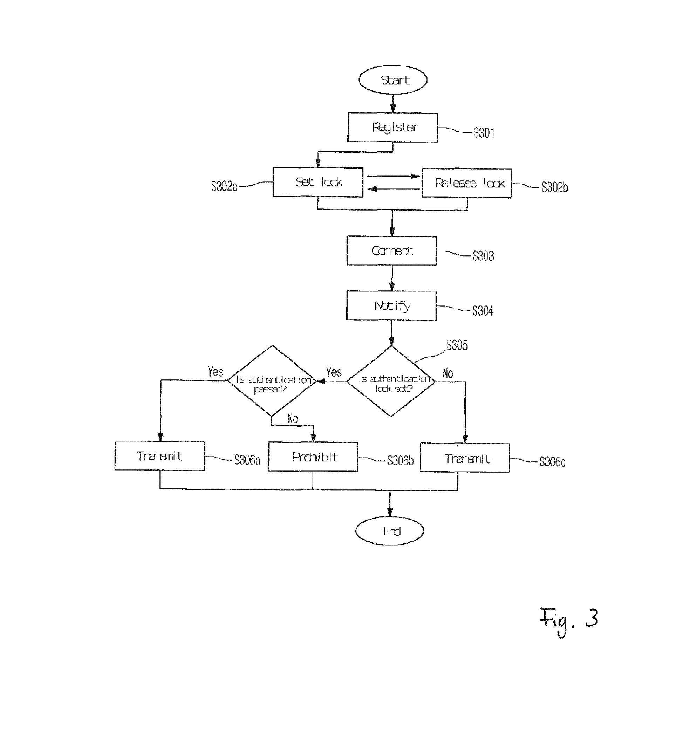

A second embodiment related to contents transmission and reception accomplished in the system of FIG. 2 is described with reference to the flowchart of FIG. 3.

1. Registration <S301>

Connection information for connecting to a site, identification information for identifying a member and authentication information are registered in the server 130.

2. Lock setting <S302a>

The member connects to a relevant site and sets an authentication lock to prevent unauthorized connection to the contents linked to the identification information by a third party.

3. Lock release <S302b>

A member may connect to a relevant site and release the set authentication lock. When the authentication lock is released, the member terminal 120 trying to decode the code C and connect to the site may freely connect to the site and access web pages assigned to the member in the site and the contents linked to the identification information of the member without an authentication process.

4. Connection <S303>

If a third party connecting to the site through a communication terminal requests to provide the member with the contents provided by the site or contents contained in the communication terminal of the third part, the server 130 accepts the request of the third party and connects relevant contents to the identification information of the member.

5. Notification <S304>

In addition, the server 130 notifies the member terminal 120 of a message informing that new contents have been arrived for the member, in addition to linking the contents to the identification information of a corresponding member.

6. Determination <S305>

If the member receiving the notification photographs the code C printed on the merchandise 110 of the member using the member terminal 120 and tries connection to the site and access to the contents arrived for the member, the server 130 determines whether or not the authentication lock is set.

7. Transmission <S306a and S306b>

In the case where the authentication lock is set, if the member is authenticated through an authentication process, the server 130 transmits the contents to the member terminal 120 <306a>. If the member is not authenticated, the server 130 prohibits transmission of the contents to the member terminal 120 <S306b>. If it is determined that the authentication lock is in a released state, the server transmits the contents to the member terminal 120 without a separate authentication procedure <S306c>.

<Description on service system and method for providing member information>

This service system and method is intended to be used for finding lost objects. Here, the lost objects may include senior people, children, pet animals and the like possessing merchandise printed with a code, as well as the merchandise itself printed with a code.

<First embodiment>

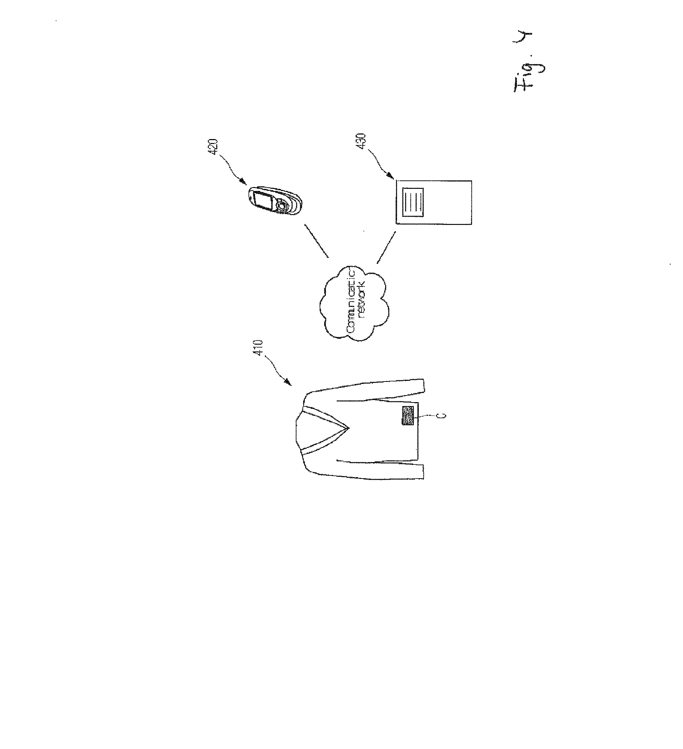

FIG. 4 is a view showing a system in which a service method for providing member information using a communication network according to an embodiment of the present invention can be implemented.

As shown in FIG. 4, a system needed for providing member information includes merchandise 410, a communication terminal 420 and a server 430.

A code C is printed on the merchandise 410, and connection information for connecting to a specific webpage (information on a member linked to a specific code is recorded in the webpage) provided by the server 430 through the Internet is contained in the code C.

The communication terminal 420 is capable of wired or wireless communication and has a camera. Here, the camera functions as a code recognition module which can recognize the code. If a member handles the camera and photographs the code C printed on the merchandise, the member terminal 420 decodes the code using an automated decode program, acquires the connection information, connects to the site provided by the server 430 and confirms the member information.

The server 430 provides service by recording information on members (hereinafter, referred to as 'member information' including a name, a phone number, an email address, etc) on a webpage. Here, the server 430 prohibits the communication terminal 420, which tries connection to the webpage, from accessing the member information when the information protection lock is set and permits the communication terminal 420 to access the member information only when the information protection lock is released.

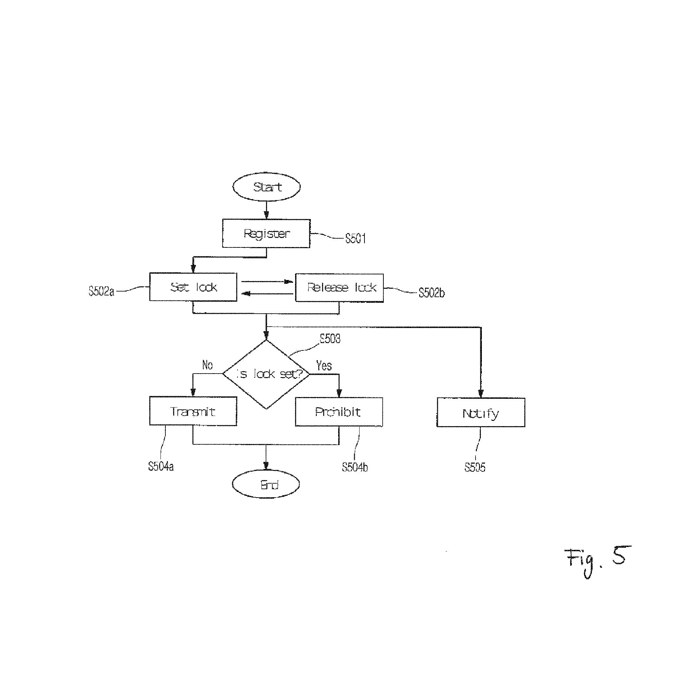

Subsequently, the service method for providing member information implemented in the service system for providing member information described above will be described with reference to the flowchart of FIG. 5.

1. Registration <S501>

Connection information for accessing member information (further specifically, connecting to a webpage recording the member information) and the member information (or could be merchandise information) are registered in the server 430.

2. Lock setting <S502a>

The information protection lock is set in order to prevent malicious use or misuse of the member information by a third party who has obtained a lost object or can access the merchandise 410 printed with a code C although the third party has not obtained the lost object. A member may connect to the server 430 and execute the lock setting. If the information protection lock is set, unauthorized leakage of the member information to a third party can be prevented. Contrarily, if the information protection lock is not set, it is possible that a third party takes a picture of a code C printed on the clothes of a passing child, obtains contact information of the parents, i.e., members, and requests to transfer money into a bank account falsely informing that the child has been kidnapped. However, such a situation can be prevented by setting the information protection lock.

3. Lock release <S502b>

A member may connect to the server 430 and release the set information protection lock. When the information protection lock is released, the communication terminal 420 trying to decode the code C and access the member information may access the member information without any particular connection restriction. For example, if the parents missing their child in an amusement park or the like release the information protection lock, a certain third party finding the crying child may easily contact with the parents by accessing the member information using the code C.

4. Determination <S503>

If a third party acquiring a lost object photographs the code C printed on the lost object using the communication terminal 420 of his or her own and tries to access the member information, the server 430 determines whether or not the information protection lock is set.

5. Permit or prohibit connection <S504a and S504b>

If the information protection lock is released, the server 430 permits the communication terminal 420 to access the member information <504a>, and if the information protection lock is set, the server 430 prohibits the communication terminal 420 from accessing the member information <504b>.

6. Notification <S505>

The server 430 notifies the position of the communication terminal 420 of the third party trying to access the member information, using a phone number or an email address of the member included in the member information. Apparently, it is further preferable to notify the position together with the phone number of the communication terminal 420 of the third party depending on implementation. Accordingly, the lost object can be found further earlier, and malicious use and misuse of the lost object can be prevented by grasping the position or phone number of the third party who maliciously or wrongly uses the lost object. In addition, it is preferable depending on implementation to notify the position or phone number of the third party to a server or a communication terminal of an agency who is in charge of finding lost objects such as a police station, as well as to the member.

<Second embodiment>

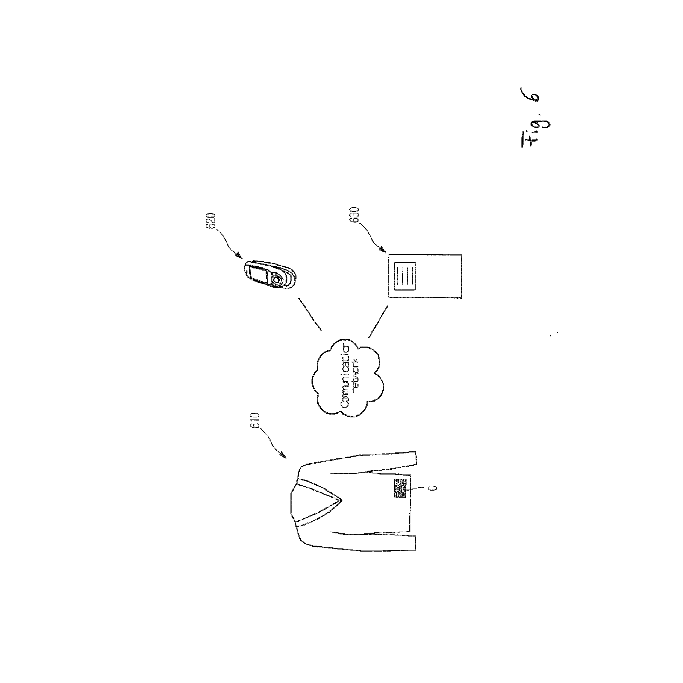

FIG. 6 is a view showing a system in which a service method for providing member information using a communication network according to a second embodiment of the present invention can be implemented.

As shown in FIG. 6, a system needed for providing member information includes merchandise 610, a communication terminal 620 and a server 630.

A code C is printed on the merchandise 610, and connection information for connecting to a specific webpage provided by the server 630 through the Internet is contained in the code C.

The communication terminal 620 is capable of wired or wireless communication and has a camera.

The server 630 provides service by recording information on members (hereinafter, referred to as 'member information' including a name, a phone number, a resident registration number, an email address, etc) on a webpage. Here, the server 630 permits the communication terminal 620 to access the member information after performing an authentication process if the authentication lock is set and permits the communication terminal 620 to access the member information without a separate authentication process when the authentication lock is released.

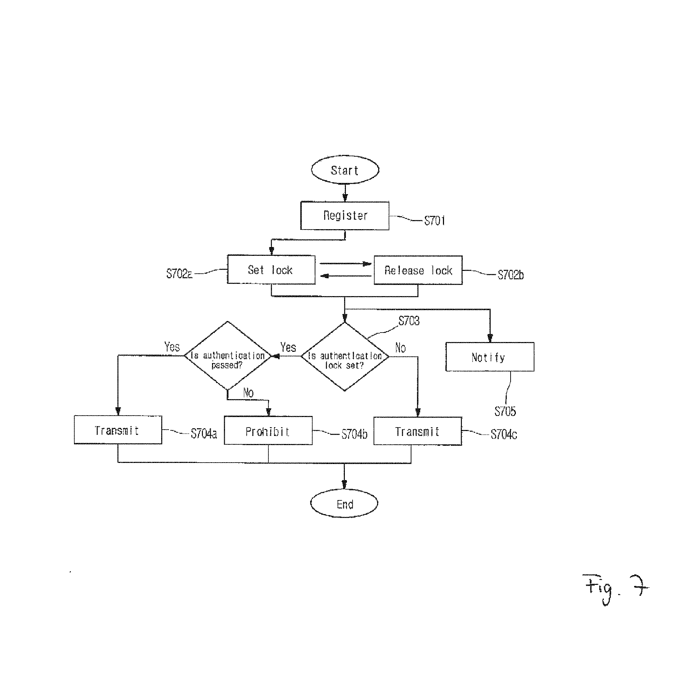

Subsequently, the service method for providing member information implemented in the service system for providing member information described above will be described with reference to the flowchart of FIG. 7.

1. Registration <S701>

Connection information for accessing member information (a phone number or the like) and the member information are registered in the server 630. In addition, authentication information for authenticating a member is also registered.

2. Lock setting <S702a>

The authentication lock is set in order to prevent malicious use or misuse of the member information.

3. Lock release <S702b>

A member may connect to the server 630 and release the set authentication lock after being authenticated as a member.

4. Determination <S703>

If a third party acquiring a lost object photographs the code C printed on the lost object using the communication terminal 620 of his or her own and tries access to the member information, the server 630 determines whether or not the authentication lock is set.

5. Permit or prohibit connection <S704a to S704c>

If it is determined that the authentication lock is released, the server 630 permits the communication terminal 620 to access the member information <704a>, and if it is determined that the authentication lock is set, the server 630 permits the communication terminal 620 to access the member information after performing a certain authentication process <704b> or prohibits an unauthenticated communication terminal 620 from accessing the member information <704c>.

6. Notification <S705>

The server 630 notifies the position (and/or the phone number) of the communication terminal 620 of the third party who tries access to the member information using a phone number or an email address of the member included in the member information.

<Third embodiment>

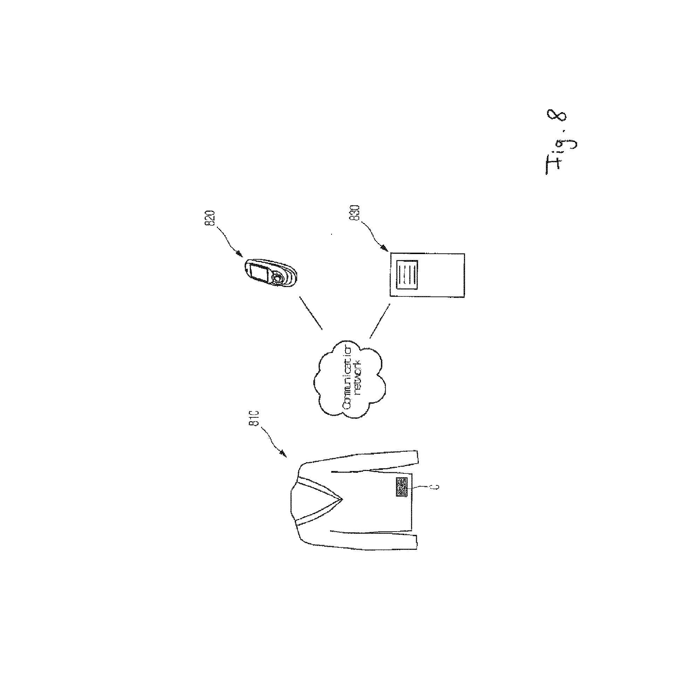

FIG. 8 is a view showing a system in which a service method for providing member information using a communication network according to a third embodiment of the present invention can be implemented.

As shown in FIG. 8, a system needed for providing member information includes merchandise 910, a communication terminal 920 and a server 930.

A code C is printed on the merchandise 910, and connection information for connecting to a specific webpage provided by the server 930 through the Internet is contained in the code C.

The communication terminal 920 is capable of wired or wireless communication, has a camera and performs a function of acquiring an image by photographing the code C and transmitting the image to the server 930.

The server 930 provides service by recording information on members on a webpage and transmits connection information (it can be one image or a video image, i.e., a plurality of consecutive images) to the communication terminal 920. The connection information is acquired by decoding the image of the code C received from the communication terminal 920. Here, the server 930 permits the communication terminal 920 to access the member information by transmitting the connection information decoded from the code C to the communication terminal 920 only when the information protection lock is released. The server 930 prohibits the communication terminal 920 from accessing the member information by not transmitting the connection information to the communication terminal 920 when the information protection lock is set.

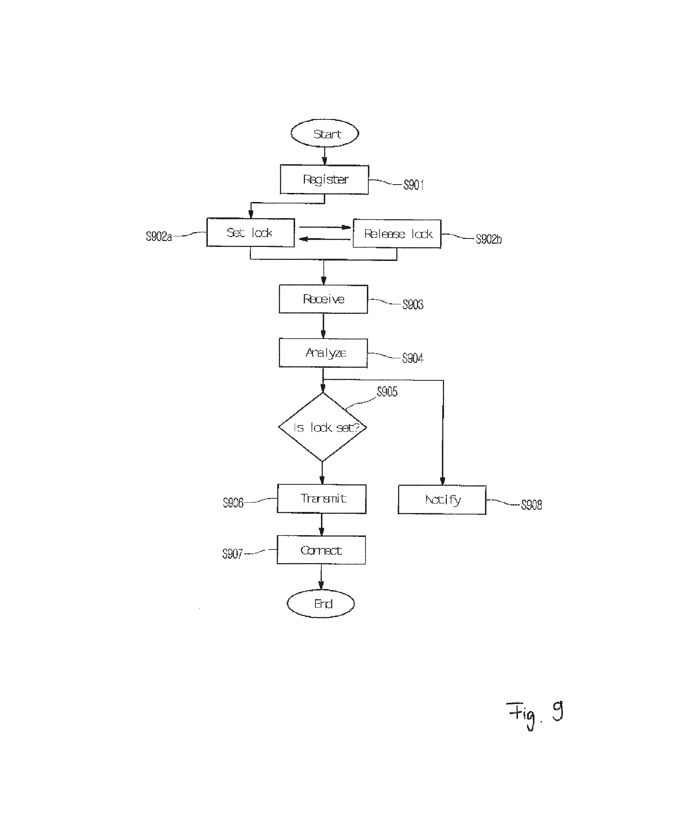

Subsequently, the service method for providing member information implemented in the service system for providing member information described above will be described with reference to the flowchart of FIG. 9.

1. Registration <S901>

Connection information for accessing member information and the member information are registered in the server 930.

2. Lock setting <S902a>

The information protection lock is set in order to prevent malicious use or misuse of the member information.

3. Lock release <S902b>

A member may connect to the server 930 and release the set information protection lock.

4. Reception <S903>

If a third party acquiring a lost object photographs a code printed on the lost object and transmits the photographed image using the communication terminal 920 of his or her own, the server 930 receives the image.

5. Analysis <S904>

The server 930 analyzes the received image to acquire connection information for accessing the member information.

6. Determination <S905>

It is determined whether or not the information protection lock is set on the member information that can be accessed through the connection information analyzed in step S904.

7. Transmission <S906>

The connection information is transmitted to the communication terminal 920 that has transmitted the image if the information protection lock is released, and this transmission step is omitted when the information protection lock is set.

8. Connection <S907>

If the communication terminal 920 of a third party acquiring a lost object tries access to the member information, the server 930 permits the communication terminal 920 to access the member information.

9. Notification <S908>

The server 930 notifies the position (and/or the phone number) of the communication terminal 920 of the third party who tries access to the member information using a phone number or an email address of the member included in the member information.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A contents service method using a communication network, the method comprising:
a registration step of registering connection information for connecting to a site which provides contents service and identification information on a member, which are contained in a code printed on merchandise;
a lock setting step of setting an information protection lock for preventing unauthorized access of a third party to contents linked to the identification information;
a lock release step of releasing the information protection lock set in the lock setting step;
a linking step of receiving a request for certain contents and linking the contents to the identification information, if a third party connected to the site using a communication terminal selects the contents that can be provided by the site and requests to provide the contents to the specific member registered in the registration step;
a determination step of determining whether or not the information protection lock is set, if the specific member recognizes the code and connects to the site through the member terminal having a code recognition module for recognizing the code; and
a transmission step of prohibiting transmission of the contents linked to the specific member to the member terminal if the information protection lock is set, and transmitting the contents linked to the identification information to the member terminal if the information protection lock is released.

2. A contents service method using a communication network, the method comprising:
a registration step of registering connection information for connecting to a site which provides contents service and identification information on a member, which are contained in a code printed on merchandise;
a lock setting step of setting an authentication lock for preventing unauthorized access of a third party to contents linked to the identification information;
a lock release step of releasing the authentication lock set in the lock setting step;
a linking step of receiving a request for certain contents and linking the contents to the identification information, if a third party connected to the site using a communication terminal selects the contents that can be provided by the site and requests to provide the contents to the specific member registered in the registration step;
a determination step of determining whether or not the authentication lock is set, if the specific member recognizes the code and connects to the site through the member terminal having a code recognition module for recognizing the code; and
a transmission step of transmitting the contents linked to the identification information to the member terminal after performing an authentication process if the authentication lock is set, and transmitting the contents linked to the identification information to the member terminal without performing the authentication process if the authentication lock is released.

3. The method according to claim 1 or 2, further comprising a notification step of notifying the member terminal of arrival of new contents for the specific member.

4. A service system for providing member information using a communication network, the system comprising:
merchandise printed with a code containing connection information for accessing information on a member (hereinafter, referred to as member information);
a communication terminal for recognizing the code printed on the merchandise, accessing the member information using the connection information and confirming the member information; and
a server having the member information, the server for transmitting the member information to the communication terminal which desires to access the member information and prohibiting access to the member information through the communication terminal if the information protection lock is set.

5. A service system for providing member information using a communication network, the system comprising:
merchandise printed with a code containing connection information for accessing information on a member (hereinafter, referred to as member information);
a communication terminal for recognizing the code printed on the merchandise, accessing the member information using the connection information and confirming the member information; and
a server having the member information, the server for permitting the communication terminal to access the member information after performing an authentication process on the communication terminal which desires to access the member information, wherein the authentication process is omitted if the authentication lock is released.

6. A service system for providing member information using a communication network, the system comprising:
merchandise printed with a code containing connection information for accessing information on a member (hereinafter, referred to as member information);
a communication terminal for acquiring an image of the code printed on the merchandise and accessing the member information through the connection information; and
a server for analyzing the connection information obtained from the image of the code and transmitting the connection information to the communication terminal when the image of the code is received from the communication terminal, wherein transmission of the connection information to the communication terminal is prohibited if the information protection lock is set on the member information related to the connection information, and the communication terminal which desires to access the member information through the connection information is permitted to access the member information.

7. A service method for providing member information using a communication network, the method comprising:
a registration step of registering connection information and the member information, the connection information for connecting to a site which provides information on a member (hereinafter, referred to as 'member information');
a lock setting step of setting an information protection lock for blocking access to the member information;
a lock release step of releasing the information protection lock set in the lock setting step;
a determination step of determining whether the information protection lock is set or released when a request for accessing the member information is received from a certain communication terminal; and
a connection step of prohibiting the communication terminal from accessing the member information if the information protection lock is set, and permitting the communication terminal to access the member information if the information protection lock is released.

8. A service method for providing member information using a communication network, the method comprising:
a registration step of registering connection information and the member information, the connection information for connecting to a site which provides information on a member (hereinafter, referred to as 'member information');
a lock setting step of setting an authentication lock for authentication needed to access the member information;
a lock release step of releasing the authentication lock set in the lock setting step;
a determination step of determining whether the authentication lock is set or released when a request for accessing the member information is received from a certain communication terminal; and
a connection step of permitting the communication terminal to access the member information after performing an authentication process if the authentication lock is set, and permitting the communication terminal to access the member information without performing the authentication process if the authentication lock is released.

9. A service method for providing member information using a communication network, the method comprising:
a registration step of registering connection information and the member information, the connection information for connecting to a site which provides information on a member (hereinafter, referred to as 'member information');
receiving an image of a code from a certain communication terminal;
an analysis step of analyzing the connection information for accessing the member information from the image of the code received from the communication terminal which desires to access the member information;
a transmission step of transmitting the connection information analyzed in the analysis step to the communication terminal; and
a connection step of permitting the communication terminal which desires to access the member information through the connection information to access the member information.

10. The method according to claim 9, preferably further comprising the steps of:
a lock setting step of setting an information protection lock for blocking access to the member information; and
a lock release step of releasing the information protection lock set in the lock setting step, and
excluding the transmission step if the information protection lock is set.

11. The method according to any one of claims 7 or 10, preferably further comprising a notification step of notifying the member of position information of the communication terminal which requests access to the member information if contact information of the member is included in the member information.

12. The method according to any one of claims 7 or 10, preferably further comprising a notification step of notifying the member of a phone number of the communication terminal which requests access to the member information if contact information of the member is included in the member information.
